Europäisches Patentamt

European Patent Office

Office européen des brevets

(19)

(11) Veröffentlichungsnummer : **0 019 756**
**B1**

## (12) EUROPÄISCHE PATENTSCHRIFT

(45) Veröffentlichungstag der Patentschrift :
**30.03.83**

(21) Anmeldenummer : **80102471.2**

(22) Anmeldetag : **06.05.80**

(51) Int. Cl.³ : **H 04 L 9/02, H 04 K 1/02**

(54) **Verfahren zur Überprüfung des Synchronlaufs zweier Schlüsselgeräte.**

(30) Priorität : **21.05.79 DE 2920589**

(43) Veröffentlichungstag der Anmeldung :
**10.12.80 Patentblatt 80/25**

(45) Bekanntmachung des Hinweises auf die Patenterteilung : **30.03.83 Patentblatt 83/13**

(84) Benannte Vertragsstaaten :
**BE CH GB LI NL SE**

(56) Entgegenhaltungen :
**EP A 0 002 580**
**FR A 2 144 439**
**GB A 1 164 531**
**GB A 1 532 363**
**US A 2 463 502**

(73) Patentinhaber : **SIEMENS AKTIENGESELLSCHAFT**
**Berlin und München Wittelsbacherplatz 2**
**D-8000 München 2 (DE)**

(72) Erfinder : **Markwitz, Wernhard, Dipl.-Ing.**
**Thalkirchner Strasse 107**
**D-8000 München 70 (DE)**

Jouve, 18, rue St-Denis, 75001 Paris, France

### Verfahren zur Überprüfung des Synchronlaufs zweier Schlüsselgeräte

Das erfindungsgemäße Verfahren dient zur Überprüfung des Synchronlaufs zweier Schlüsselgeräte, wonach Daten von einer ersten Station und umgekehrt übertragen werden.

Im Rahmen einer bekannten Startprozedur wird anschließend an eine Zeitpunktkennung ein Spruchschlüssel im Klartext übertragen. Zur Überprüfung des Synchronlaufs zweier Schlüsselgeräte ist es bekannt, im Anschluß an diese Startprozedur eine Folge von vereinbarten Zeichen verschlüsselt zu übertragen. In der Gegenstelle werden die verschlüsselten Zeichen entschlüsselt und es wird überprüft, ob die Folge der vereinbarten Zeichen empfangen wurde. Bei Übereinstimmung der empfangenen Zeichen mit den vereinbarten Zeichen laufen die beiden Schlüsselgeräte synchron. Dieses bekannte Verfahren zur Überprüfung des Synchronlaufs der beiden Schlüsselgeräte hat den Nachteil, daß im Zuge des Verfahrens Informationen preisgegeben werden, mit Hilfe derer eine Entzifferung der verschlüsselten Nachricht erleichtert wird. Zum Entschlüsseln der verschlüsselten Nachrichten müssen der Spruchschlüssel, ferner ein Schlüsselalgorithmus und der Grundschlüssel bekannt sein. Ein unbefugter Entzifferer kann zunächst den Spruchschlüssel im Klartext empfangen. In vielen Fällen, insbesondere mit Hilfe käuflich erwerbbarer Schlüsselgeräte kann der Schlüsselalgorithmus ermittelt werden. Unter diesen Voraussetzungen verbleibt lediglich der jeweils verwendete Grundschlüssel, der von einem nichtbefugten Entzifferer gefunden werden muß, um die verschlüsselte Nachricht zu entziffern. Wenn nach dem erwähnten bekannten Verfahren, vereinbarte und als bekannt anzusehende, Zeichen verschlüsselt werden, dann kann ein nichtbefugter Entzifferer unter Voraussetzung des bekannten Textes und durch Variationen von Probegrundschlüsseln den jeweils richtigen Grundschlüssel ermitteln.

Nach einem weiteren bekannten Verfahren zur Überprüfung des Synchronlaufs zweier Schlüsselgeräte werden nach einer vereinbarten Vorschrift dem Kryptogenerator Prüfbits entnommen und zur Gegenstelle übertragen. In der Gegenstelle werden ebenfalls Prüfbits erzeugt und es wird die Übereinstimmung der sendeseitig und der empfangsseitig erzeugten Prüfbits überprüft und danach der Synchronlauf der beiden Schlüsselgeräte beurteilt. Auch dieses bekannte Verfahren liefert einem unbefugten Entzifferer Informationen, mit Hilfe derer der jeweils verwendete Grundschlüssel relativ schnell ermittelbar ist.

Aus der FR-A-2 144 439 ist ein Verfahren zur Identitätsprüfung bekannt, bei dem im Bereich einer ersten Station ein Zufallstext erzeugt, gespeichert und verschlüsselt zu einer zweiten Station übertragen wird. Die zweite Station verschlüsselt diesen Zufallstext und sendet ihn verschlüsselt zur ersten Station zurück. Im Bereich der ersten Station werden die beiden Zufallstexte, nämlich der an der ersten Station erzeugte Zufallstext und der von der zweiten Station empfangene Zufallstext auf Übereinstimmung geprüft und bei Ungleichheit der beiden Zufallstexte wird eine weitere Übertragung von der ersten Station zur zweiten Station gesperrt. Dieses bekannte Verfahren ermöglicht eine Identitätsprüfung, die eine Überprüfung der Funktion der Schlüsselgeräte in den beiden Stationen einschließt.

Falls die beiden Zufallstexte, nämlich der gespeicherte und der entschlüsselte Zufallstext nicht übereinstimmen ist es nicht ohne weiteres möglich, zu lokalisieren, ob der Fehler in der ersten oder in der zweiten Station auftritt.

Der Erfindung liegt daher die Aufgabe zugrunde, ein Verfahren anzugeben, unter dessen Verwendung es ermöglicht wird sendeseitig den Synchronlauf der Schlüsselgeräte zu überprüfen, ohne daß Informationen preisgegeben werden, die eine unbefugte Entzifferung erleichtern und die gleichzeitig eine bessere Lokalisierung eines Fehlers ermöglichen.

Die Lösung der vorliegenden Aufgabe ist gekennzeichnet durch die folgenden Verfahrensschritte :

A. Im Anschluß an eine Startprozedur wird an der ersten Station (STA1) ein Zufallstext erzeugt und verschlüsselt zur zweiten Station (STA2) übertragen.

B. Der verschlüsselte Zufallstext wird im Bereich der ersten Station (STA1) entschlüsselt und gespeichert.

C. In der zweiten Station (STA2) wird der Zufallstext entschlüsselt, anschließend wird der entschlüsselte Zufallstext der zweiten Station (STA2) verschlüsselt und zur ersten Station (STA1) übertragen.

D. In der ersten Station (STA1) wird der empfangene und verschlüsselte Zufallstext entschlüsselt und mit dem im Bereich der ersten Station (STA1) gespeicherten Zufallstext verglichen.

E. Bei Ungleichheit des empfangenen und des im Bereich der ersten Station (STA1) gespeicherten Zufallstextes wird ein Alarmsignal abgegeben.

Das erfindungsgemäße Verfahren ermöglicht sowohl eine Überprüfung des Synchronlaufs der beiden Schlüsselgeräte, ohne daß Informationen preisgegeben werden, die eine unbefugte Entzifferung der Nachrichten erleichtern, da anstelle eines vereinbarten und bekannten Textes ein Zufallstext verwendet wird, der von Fall zu Fall und in zufälliger Weise verschieden ist. Durch die Speicherung des in der ersten Station verschlüsselten und entschlüsselten Textes in der ersten Station ist es im Fehlerfall auf einfache Weise zu überprüfen, ob der Fehler in der ersten oder in der zweiten Station auftritt. Ein Vergleich des erzeugten Zufallstextes mit dem gespeicherten Zufallstext läßt sofort erkennen, ob der Fehler in der ersten Station oder auf der Übertragungsstrecke und in der zweiten Station zu suchen ist oder nicht. Ein Vergleich des gespeicherten Textes mit dem empfangenen und dem entschlüsselten Text ermöglicht dann eine Überprüfung des Synchronlaufs der Schlüsselgeräte in der ersten und in der zweiten Station.

Im folgenden werden Ausführungsbeispiele der Erfindung anhand der Figuren 1 bis 3 beschrieben. Es zeigen :

Figur 1   ein Blockschaltbild eines Datenübertragungssystems,

Figur 2   ein Blockschaltbild eines sendeseitigen Schlüsselgerätes und

Figur 3   ein Blockschaltbild eines empfangsseitigen Schlüsselgerätes.

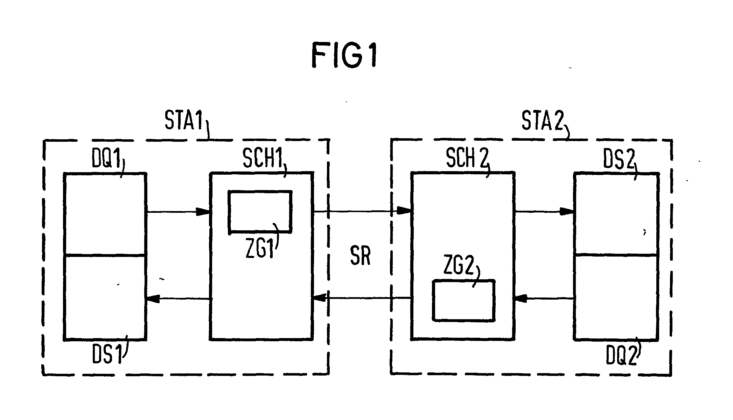

Gemäß Fig. 1 werden von der ersten Station STA1 über die Übertragungsstrecke SR Daten zur zweiten Station STA2 übertragen. Als Übertragungsstrecke SR kann beispielsweise eine Funkstrecke oder eine Drahtverbindung vorgesehen sein. Die Übertragungsstrecke kann halbduplex oder duplex betrieben werden.

Im Bereich der ersten Station STA1 sind die Datenquelle DQ1, die Datensenke DS1 und das Schlüsselgerät SCH1 angeordnet. Im Bereich der zweiten Station STA2 sind die Datenquelle DQ2, die Datensenke DS2 und das Schlüsselgerät SCH2 angeordnet. Eine Nachrichtenübertragung wird mit einer bekannten Startprozedur eingeleitet. Wenn beispielsweise von der Station STA1 zur Station STA2 eine Nachricht übertragen werden soll, dann wird von der Station STA1 aus anschließend an eine Zeitpunktkennung der Spruchschlüssel im Klartext zur Station STA2 übertragen. Danach sollen die Schlüsselgeneratoren beider Stationen synchron laufen. Um dies zu überprüfen, wird im Anschluß an die Startprozedur im Zufallsgenerator ZG1 ein Zufallstext erzeugt und einerseits im Bereich des Schlüsselgerätes SCH1 gespeichert und andererseits verschlüsselt zur zweiten Station STA2 übertragen. In dieser zweiten Station wird der Zufallstext entschlüsselt, anschließend wieder verschlüsselt und der verschlüsselte Zufallstext wird wieder zur ersten Station STA1 übertragen. Im Bereich des Schlüsselgerätes SCH1 wird der empfangene verschlüsselte Zufallstext entschlüsselt und der dadurch gewonnene entschlüsselte empfangene Zufallstext wird mit dem in der ersten Station STA1 erzeugten Zufallstext verglichen. Eine Übereinstimmung der beiden Zufallstexte signalisiert den synchronen Lauf der beiden Schlüsselgeräte SCH1, SCH2. Eine Nichtübereinstimmung der beiden Zufallstexte signalisiert, daß die beiden Schlüsselgeräte nicht synchron laufen. Bei Ungleichheit der beiden Zufallstexte wird der noch nicht hergestellte Gleichlauf der beiden Schlüsselgeräte mit Hilfe eines Alarmsignals signalisiert.

Dieses beschriebene an sich bekannts Verfahren ermöglicht die Überprüfung des Synchronlaufs der beiden Schlüsselgeräte SCH1 und SCH2 an der Stelle der Station STA1. In ähnlicher Weise kann der Synchronlauf der beiden Schlüsselgeräte SCH1 und SCH2 von der Station STA2 aus überprüft werden. In diesem Fall wird mit Hilfe des Zufallsgenerators ZG2 der Zufallstext erzeugt und verschlüsselt zur Station STA1 übertragen. Die Station STA1 entschlüsselt diesen Zufallstext und schickt ihn ebenfalls verschlüsselt zurück zur Station STA2. Dort werden wieder die beiden Zufallstexte auf Übereinstimmung geprüft.

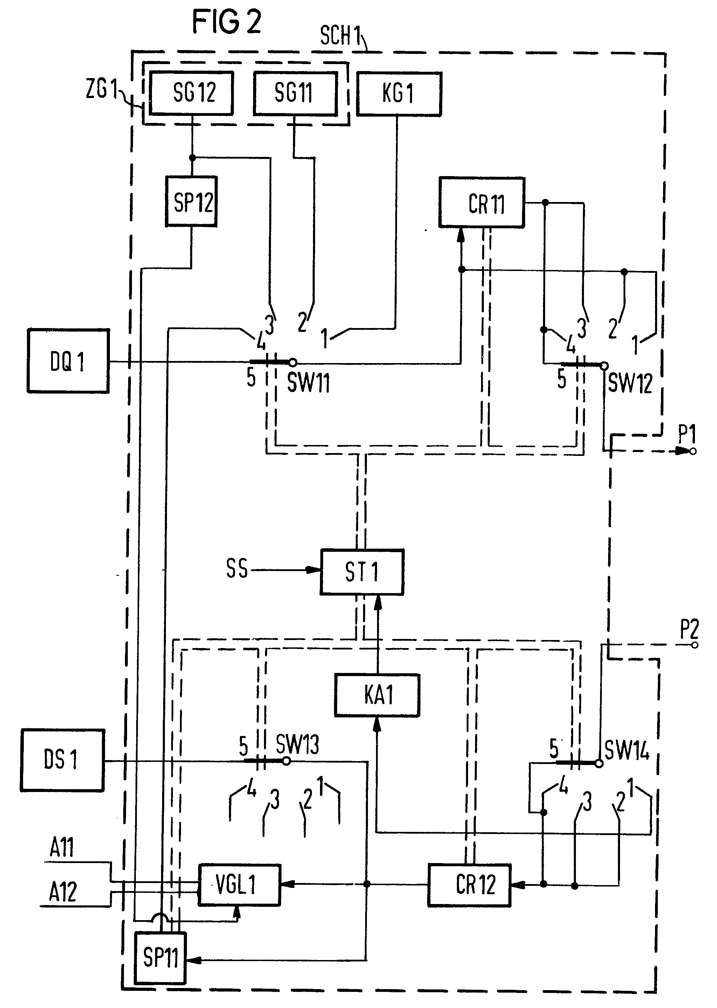

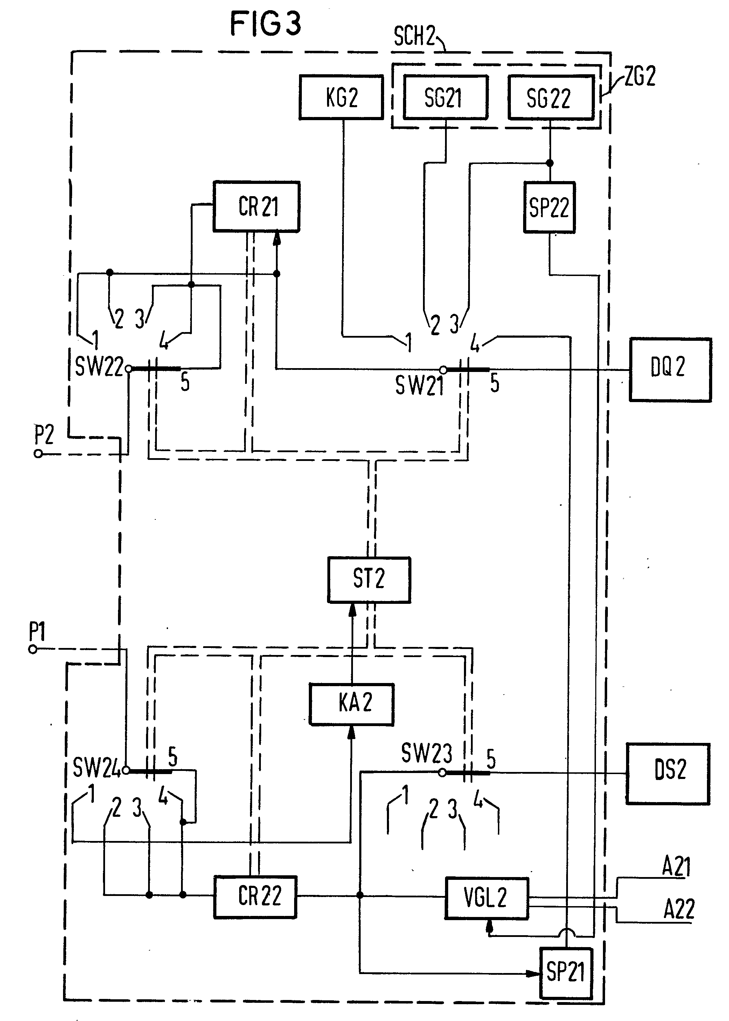

Fig. 2 zeigt ausführlicher das auch in Fig. 1 dargestellte Schlüsselgerät SCH1. Fig. 3 zeigt ausführlicher das ebenfalls in Fig. 1 dargestellte Schlüsselgerät SCH2.

Das Schlüsselgerät SCH1 umfaßt mehrere Schalter SW11, SW12, SW13, SW14, SW15, die je die Schaltstellungen 1, 2, 3, 4, 5 einnehmen können und vom Steuergerät ST1 aus gesteuert werden. In ähnlicher Weise besitzt das Schlüsselgerät SCH2 die Schalter SW21, SW22, SW23, SW24, SW25, die vom Steuergerät ST2 aus gesteuert werden.

Im folgenden Text wird die Arbeitsweise der in den Fig. 2 und 3 dargestellten nicht beanspruchten Schaltungsanordnungen bei Vollduplexbetrieb beschrieben. Der Beginn der Nachrichtenübertragung wird mit dem Startsignal SS dem Steuergerät ST1 signalisiert. Danach nehmen alle Schalter des Schlüsselgeräts SCH1 ihre Schalterstellungen 1 ein. Die Schalter des Schlüsselgeräts SCH2 haben schon vorher· ihre Schalterstellungen eingenommen.

Der Kennwortgeber KG1 erzeugt eine Zeitpunktkennung und gibt diese Kennung bei der Schalterstellung 1 der Schalter SW11 und SW12 über den Schaltungspunkt P1 ab. Wie die Fig. 3 zeigt, gelangt diese Kennung über den Schalter SW24 in Schalterstellung 1 zum Kennwortauswerter KA2, der den Empfang des Kennworts dem Steuergerät ST2 signalisiert. Das Steuergerät ST2 veranlaßt, daß der Kennwortgeber KG2 aktiviert wird und seine Kennung über die Schalter SW21, SW22 und über den Schaltungspunkt P2 dem in Fig. 2 dargestellten Schlüsselgerät SCH1 zugeführt wird. Über den Schalter SW14 gelangt das Kennwort zum Kennwortauswerter KA1, das dem Steuergerät ST1 die Erkennung des Kennwortes signalisiert.

Nachdem der Kennwortauswerter KA1 die Kennung erkannt, hat, schaltet das Steuergerät ST1 alle Schalter des Schlüsselgerätes SCH1 in ihre Schalterstellungen 2. Nachdem der Kennwortauswerter KA2 die Kennung erkannt hat, schaltet die in Fig. 3 dargestellte Steuerstufe ST2 alle Schalter des Schlüsselgerätes SCH2 in ihre Schalterstellungen 2. Der Schlüsselgenerator SG11 erzeugt einen· Spruchschlüssel, der über die Schalter SW11, SW12, SW24 dem Kryptorechner CR22 zugeführt wird. Nach dem letzten Bit des Spruchschlüssels ist die Schlüsselstellung dieses Kryptorechners voreingestellt. Der Schlüsselgenerator SG21 erzeugt ebenfalls einen Spruchschlüssel, der über die Schalter SW21, SW22, SW14 in den Kryptorechner CR12 gelangt. Damit wird die Schlüsselstellung dieses Kryptorechners voreingestellt.

Das Steuergerät ST1 stellt den Kryptorechner CR11 in eine endgültige Schlüsselstellung ein. Danach sind die Kryptorechner CR11 bzw. CR12 zum Verschlüsseln bzw. zum Entschlüsseln eingestellt. Das Steuergerät ST2 bringt den Kryptorechner CR22 in eine endgültige Schlüsselstellung. Danach sind die Kryptorechner CR22 bzw. CR21 zum Verschlüsseln bzw. Entschlüsseln eingestellt.

Zur Überprüfung des Synchronlaufs der beiden Schlüsselgeräte SCH1, SCH2 veranlaßt das Steuergerät ST1 bzw. das Steuergerät ST2 die Schalterstellungen 3 der Schalter des Schlüsselgerätes SCH1 bzw. SCH2. Der Schlüsselgenerator SG12 erzeugt als Prüftext einen Pseudozufallstext, der über den Schalter SW11 dem Kryptorechner CR11 zugeführt und dort verschlüsselt wird. Der verschlüsselte Prüftext gelangt über die Schalter SW12, SW24 in den Kryptorechner CR22 und wird dort entschlüsselt. Vom entschlüsselten Text werden die ersten n Bits im Speicher SP21 gespeichert und die restlichen Bits werden unterdrückt. Der Pseudozufallstext des Schlüsselgenerators SG12 wird aber außerdem dem Speicher SP12 zugeführt, der die ersten n Bits speichert. Die restlichen Bits werden nicht weiter verwendet.

Der Schlüsselgenerator SG22 erzeugt als Prüftext ebenfalls einen Pseudozufallstext, der über den Schalter SW21 dem Kryptorechner CR21 zugeführt und dort verschlüsselt wird. Der verschlüsselte Text gelangt über die Schalter SW22, SW14 in den Kryptorechner CR12, der den Text entschlüsselt. Die ersten n Bits des entschlüsselten Textes werden im Speicher SP11 gespeichert und der Rest geht verloren. Außerdem wird der vom Schlüsselgenerator SG22 erzeugte Text dem Speicher SP22 zugeführt, der die ersten n Bits speichert ; die restlichen Bits werden nicht weiterverarbeitet.

Das Steuergerät ST1 bzw. ST2 veranlaßt die Schalterstellungen 4 der Schalter des Schlüsselgerätes SCH1 bzw. SCH2. Es wurde bereits erwähnt, daß im Speicher SP21 die ersten n Bits des Prüftextes gespeichert sind. Dieser entschlüsselte Text gelangt über den Schalter SW21 in den Kryptorechner CR21, der den Text verschlüsselt und der verschlüsselte Prüftext gelangt über die Schalter SW22, SW14 in den Kryptorechner CR12. Im Vergleicher VGL1 wird der entschlüsselte Prüftext des Kryptorechners CR12 mit dem unverschlüsselten Prüftext des Speichers SP12 verglichen und bei Übereinstimmung der beiden Prüftexte wird das Signal A12 abgegeben, das die geglückte Einphasung der beiden Schlüsselgeräte synchronisiert. In diesem Fall kann der Kryptobetrieb aufgenommen werden. Bei Nichtübereinstimmung der beiden Prüftexte wird das Signal A11 abgegeben, das die noch nicht erfolgte Synchronisierung der beiden Schlüsselgeräte signalisiert.

Es wurde bereits erwähnt, daß der Speicher SP11 die ersten n Bits des im Schlüsselgenerator SG22 erzeugten Prüftextes speichert. Dieser Prüftext gelangt über den Schalter SW11 in den Kryptorechner CR11. Der verschlüsselte Prüftext gelangt über die Schalter SW12, SW24 in den Kryptorechner CR22. Der Vergleicher VG2 vergleicht den entschlüsselten Prüftext des Kryptorechners CR22 mit dem unverschlüsselten Prüftext des Speichers SP22. Bei Übereinstimmung bzw. Nichtübereinstimmung der beiden Prüftexte wird das Signal A22 bzw. A21 abgegeben.

Bei dem vorliegendem Verfahren erfüllt der Schlüsselgenerator SG11 eine doppelte Funktion. Einerseits erzeugt er den Spruchschlüssel, der im Rahmen der Startprozedur über die Schalter SW11, SW12 unverschlüsselt über den Schaltungspunkt P11 zum Schlüsselgerät SCH2 übertragen wird. Andererseits kann der Schlüsselgenerator SG11 als ein Teil des Zufallsgenerators ZG1 angesehen werden, der aus den beiden Schlüsselgeräten SG11 und SG21 gebildet wird. Da die beiden Schlüsselgeneratoren SG11 und SG12 unabhängig voneinander arbeiten, kann der vom Schlüsselgenerator SG12 abgegebene Prüftext weitgehend als Zufallstext angesehen werden. In ähnlicher Weise arbeiten auch die in Fig. 3 dargestellten Schlüsselgeneratoren SG21 und SG22 unabhängig voneinander und bilden den Zufallsgenerator ZG2.

Wenn die Signale A12 bzw. A22 die ordnungsgemäße Synchronisierung signalisieren, dann veranlassen die Steuergeräte ST1 bzw. ST2 die Schalterstellungen 5 der Schalter des Schlüsselgerätes SCH1 bzw. SCH2. Bei diesen Schalterstellungen gelangen die Daten der Datenquelle DQ1 über den Schalter SW11 in den Kryptorechner CR11, werden dort verschlüsselt und die verschlüsselten Daten gelangen über den Schalter SW24 in den Kryptorechner CR22. Anschließend werden die entschlüsselten Daten über den Schalter SW23 der Datensenke DS2 zugeführt. In ähnlicher Weise gelangen die Daten der Datenquelle DQ2 über den Schalter SW21 in den Kryptorechner CR21. Die verschlüsselten Daten gelangen über den Schalter SW22, über den Schaltungspunkt P2 und über den Schalter SW14 in den Kryptorechner CR12. Der entschlüsselte Text gelangt über den Schalter SW13 in die Datensenke DS1.

Das beanspruchte Verfahren weicht insofern vom oben beschriebenen Verfahren ab, daß im Speicher SP12 nicht direkt der im Schlüsselgenerator SG12 erzeugte Pseudozufallstext gespeichert wird, sondern ein Text, der durch Verschlüsselung dieses Textes in CR11 und nachfolgender Entschlüsselung dieses verschlüsselten Textes in CR12 entstanden ist. Ebenso wird in der anderen Station SCH2 vorgegangen. Dies ist in den Figuren nicht angegeben.

Mit Hilfe des Verfahrens gemäß der Erfindung soll nicht nur eine Überprüfung des Synchronlaufs erfolgen, sondern es soll auch die Prüfungsmöglichkeit erweitert werden. Durch die Speicherung des in der ersten Station verschlüsselten und entschlüsselten Zufallstextes im Bereich der ersten Station ist es im Fehlerfall ohne weiteres möglich, festzustellen, ob der Fehler in der ersten Station oder auf der Übertragungsstrecke und in der zweiten Station auftritt. Wenn der in der ersten Station erzeugte Zufallstext mit dem gespeicherten Zufallstext nicht übereinstimmt ist der Fehler eindeutig in der ersten Station zu suchen. Andernfalls tritt der Fehler entweder auf der Übertragungsstrecke oder in der zweiten Station auf.

## Anspruch

Verfahren zur Überprüfung des Synchronlaufs zweier Schlüsselgeräte, wonach Daten von einer ersten Station zu einer zweiten Station und umgekehrt übertragen werden, gekennzeichnet durch die folgenden Verfahrensschritte :

A) Im Anschluß an eine Startprozedur wird an der ersten Station (STA1) ein Zufallstext erzeugt und verschlüsselt zur zweiten Station (STA2) übertragen.

B) Der verschlüsselte Zufallstext wird im Bereich der ersten Station (STA1) entschlüsselt und gespeichert.

C) In der zweiten Station (STA2) wird der Zufallstext entschlüsselt, anschließend wird der entschlüsselte Zufallstext der zweiten Station (STA2) verschlüsselt und zur ersten Station (STA1) übertragen.

D) In der ersten Station (STA1) wird der empfangene und verschlüsselte Zufallstext entschlüsselt und mit dem im Bereich der ersten Station (STA1) gespeicherten Zufallstext verglichen.

E) Bei Ungleichheit des empfangenen und des im Bereich der ersten Station (STA1) gespeicherten Zufallstextes wird ein Alarmsignal abgegeben.

## Claim

A process for checking the synchronous operation of two code devices via which data is transmitted from a first station to a second station and vice versa, characterised by the following process steps :

A) following a start procedure, a random text is produced at the first station (STAL) and transmitted in coded form ; to the second station (STA2) ;

B) the coded random text is decoded and stored in the region of the first station (STA1) ;

C) In the second station (STA2) the random text is decoded and the random text as decoded at the second station (STA2) is subsequently transmitted in coded form back to the first station (STA1) ;

D) the received coded random text is decoded in the first station (STA1) and compared with the random text stored in the region of the first station (STA1) ; and

E) in the event of inequality of the received random text and the random text stored in the region of the first station (STA1), an alarm signal is emitted.

## Revendication

Procédé pour vérifier le fonctionnement synchrone de deux dispositifs chiffreurs, du type dans lequel des données provenant d'une première station sont transmises à une seconde station, et inversement, caractérisé par les phases opératoires suivantes :

A) à la suite d'une procédure de démarrage, on produit au niveau de la première station (STA1) un texte aléatoire et on le transmet sous forme chiffrée à la seconde station (STA2).

B) Le texte aléatoire chiffré est déchiffré et mémorisé dans le domaine de la première station (STA1).

C) Dans la seconde station (STA2) le texte aléatoire est déchiffré, puis le texte aléatoire déchiffré de la seconde station (STA2) est chiffré et transmis à la première station (STA1).

D) Dans la première station (STA1) le texte aléatoire reçu et chiffré est déchiffré et il est comparé avec le texte aléatoire mémorisé dans le domaine de la première station (STA1).

E) En cas d'inégalité entre le texte aléatoire reçu et celui qui a été mémorisé dans le domaine de la première station (STA1), un signal d'alarme est émis.

# FIG 1

# FIG 2

# FIG 3